# EUROPEAN PATENT APPLICATION

(11) **EP 1 698 587 A2**
(43) Date of publication of application: **06.09.2006**
(21) Application number: 06250795.9
(22) Date of filing: 15.02.2006
(51) Int. Cl.: B67D 1/08, F16L 11/22, F16L 53/00, F25D 31/00

(54) **Improved beverage python**

(30) Priority: 02.03.2005 GB 0504264
(71) Applicant: VALPAR INDUSTRIAL LIMITED, Bangor BT19 7QY (GB)
(72) Inventor: Beckett, Robert P., County Down Northern Ireland (GB)
(74) Representative: Waller, Stephen

(57) **Abstract**

A beverage python comprising a plurality of beverage pipes 2 for delivering a beverage from a source to a remote dispense point, and at least one coolant pipe 1a,1b for carrying a coolant, the beverage pipes 2 and the coolant pipes 1a,1b being surrounded by a thermally insulating sheath 3, a thermally conductive medium 4 being provided between the coolant pipes 1a,1b and the beverage pipes 2 to enhance heat transfer between the coolant pipes 1a,1b and the beverage pipes 2.

## Description

The present invention relates to an improved beverage python for delivering chilled beverages from a store location to a remote beverage dispense point.

Beverage pythons are used to deliver multiple draught beverages over distance from a store location, such as a cellar, to a remote dispense point, such as a plurality of dispensing taps on a bar.

The ideal python should have minimal effect on the beverage, associated equipment and the surrounding environment.

A typical beverage python comprises a plurality of beverage pipes bundled together with one or more coolant carrying pipes, usually a first coolant pipe for conveying coolant to the dispense point and a second coolant pipe for returning the coolant to a refrigeration device provided at the store location. The bundle of beverage dispense and coolant pipes are generally located inside a thermally insulating sheath with the beverage pipes located around and in contact with the coolant pipes.

Generally the purpose of the python is not to cool the beverage but to minimise the change in temperature of the beverage between the store location and the dispense point. Beverages are frequently served chilled to a temperature of around 2ºC to 5ºC (i.e. between 10º C and 30º C below the ambient temperature) and thus are usually stored in chilled containers and/or a refrigeration device is provided at the storage location upstream of the python to chill the beverage.

Heating of the beverage during transfer from the store location to the remote dispense point is reduced by thermally insulating the beverage pipes by means of the sheath and by circulating coolant through the coolant pipes to remove heat from the python.

Due to the temperature gradient between the beverage in the python and the ambient air surrounding the python, heat energy is conveyed to the beverage within the python. This heat energy tends to increase the temperature of the beverage, particularly during intervals where no beverage is being dispensed and the beverage is thus stationary in the python for a considerable period of time.

The purpose of the coolant pipes and associated refrigeration device is to attempt to compensate for heat energy conveyed to the beverage through the insulating sheath from the surroundings as the beverage is transferred from the store location to the dispense point.

In typical beverage python having a 13mm thick sheath of insulating polymeric foam, the beverage being dispensed experiences a heat gain of 11 watts/m based on a 25m python at 30ºC ambient temperature. The impact of this heat gain within the python is to increase the dispense temperature of the beverage. Even using a refrigeration device to supply coolant to the python, a temperature increase at the dispense point of around 4º C for a beverage stored at 2º C is commonly experienced using the abovementioned typical 25m python at 30ºC ambient temperature.

An object of the present invention is to minimise the heat gain of the beverage as it passes through the python to achieve a lower temperature at the dispense point for a given beverage initial (storage) temperature.

According to the present invention there is provided a beverage python comprising a plurality of beverage pipes for delivering a beverage from a source to a remote dispense point, and at least one coolant pipe for carrying a coolant, the beverage pipes and the at least one coolant pipe being surrounded by a thermally insulating sheath, a thermally conductive medium being provided between the at least one coolant pipe and the plurality of beverage pipes to enhance heat transfer between the at lest one coolant pipe and the plurality of beverage pipes.

Preferably the thermally conductive media is conformable to at least partially fill the space between the beverage pipes and the at least one coolant pipe.

Preferably the thermally conductive media comprises a liquid, more preferably water.

Preferably the thermally conductive media is retained in a carrier means to prevent the media from migrating into the region between the plurality of beverage pipes and the surrounding sheath. Where the thermally conductive media comprises a liquid, preferably the carrier means comprises an absorbent material.

In one embodiment of the present invention, the thermally conductive media comprises water and the carrier means comprises a hydrophilic polymer, such as sodium polyacrylate, which polymer absorbs water to form a gel filling the spaces between the beverage pipes and the at least one coolant pipe. Preferably the hydrophilic polymer is carried by a strip of fabric or similar absorbent and flexible material, located between the at least one coolant pipe and the beverage pipe.

In an alternative embodiment the thermally conductive media comprises a thermally conductive solid material, such as graphite, in granular or powder form, the thermally conductive media preferably being retained in a carrier member in the form of a conformable paste or putty.

By providing a thermally conductive media between the at least one coolant pipe and the plurality of beverage pipes, the thermal path between the at least one coolant pipe and the plurality of beverage dispense tubes is enhanced, increasing the rate of heat transfer between the beverage pipes and the at least one coolant pipe, this increasing the efficiency of the cooling effect of the coolant contained in the at least coolant pipe.

Preferably the beverage pipes are formed from a flexible, food grade plastic.

Whilst specific examples are described above, it is envisaged that the thermally conductive media might comprise any liquid, gas or solid having a coefficient thermal conductivity greater than that of air.

According to a further aspect of the present invention there is provided a beverage python comprising a plurality of beverage pipes for distributing a beverage from a source to a remote dispense point, and at least one coolant pipe for carrying a coolant, the beverage pipes and the at least one coolant pipe being surrounded by a thermally insulating sheath, the thermally insulating sheath comprises a first layer of thermal insulation comprising a porous thermally insulating material encased in an evacuated enclosure of non-porous sheet material, preferably metallised plastic sheet material.

Preferably the first layer of thermal insulation is surrounded by a second layer of insulation comprising polymeric foam.

The first layer of thermal insulation provides a substantially greater level of thermal insulation for a given thickness than materials typically use to insulate beverage pythons, such as foamed nitrile rubber, and thus can achieve a higher degree of thermal insulation than known pythons without increasing the overall thickness of the python.

Such evacuated porous thermal insulation material, known as a vacuum insulation panel, is manufactured by NanoPore Incorporated and comprises a layer of porous insulation material such as glass fibre, precipitated silica or nanoporous silica, encased in a heat sealable metallised plastic envelope, the insulation material being sealed within the envelope which is evacuated to a pressure of less than 10mbar. The evacuated porous material forming the first layer of thermal insulation has a k value of 0.020 W/mK compared to a k value of 0.036W/mK for the standard foamed nitrile rubber typically used to insulate a beverage python.

The present invention will now be described, by way of example, with reference to the accompanying drawings, in which:
Figure 1 is a cross section through a beverage python according to an embodiment of the present invention;
Figure 2 is a table comparing the heat gain of beverage in the python according to Fig. 1 compared to a typical known python;
Figure 3a is a schematic view of a typical beverage dispense system using a standard python;
Figure 3b is a schematic view of a beverage dispense system using the python of Fig. 1;
Figure 4 is a table showing beverage dispense temperatures using the dispense system of Fig. 3a; and
Figure 5 is a table showing beverage dispense temperatures using the dispense system of Fig. 3b.

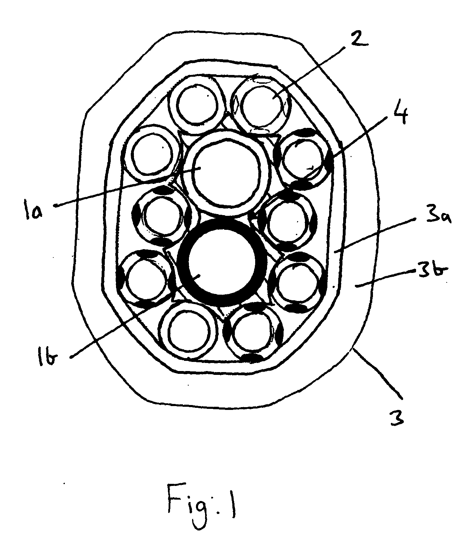

As shown in Fig. 1, a beverage python according to a preferred embodiment of the present invention comprises a bundle of flexible plastic pipes including a coolant flow pipe 1a and a coolant return pipe 1b surrounded by a plurality of beverage pipes 2 for delivering a plurality of different (or the same) beverages from a store location to a dispense point.

The bundle of pipes is encased in an insulating sheath 3. The sheath 3 comprises an inner layer 3a of thermally insulating material formed from a porous insulating material encased in a metallized plastic envelope evacuated to around 10mbar. Such material provides a very high degree of thermal insulation (k value typically 0.020 W/mK). The sheath 3 further comprises an outer layer 3b of foamed nitrile rubber.

In a typical python, the coolant pipes only contact the beverage pipes at a very narrow point of contact and a large amount of air is trapped between the coolant pipes and the beverage pipes. Air is a poor conductor of heat energy and thus heat transfer between coolant in the coolant pipes and beverage in the beverage pipes is inhibited.

The present invention overcomes this problem by providing a conformable thermally conductive media 4 between the coolant pipes 1a, 1b and the beverage pipes 2, which media 4 fills the spaced between the coolant pipes 1a,1b and the beverage pipes 2 to provide an improved thermal path therebetween and enhanced heat transfer between the beverage and the coolant.

In the preferred embodiment shown in Fig. 1, the thermally conductive media 4 comprises a layer of porous fabric carrier material impregnated with a hydrophilic polymer, such as sodium polyacrylate. During manufacture of the python the carrier material is soaked in water whereby the hydrophilic polymer absorbs the water and swells to form a gel filling the spaces between the coolant pipes 1a, 1b and the beverage pipes 2. The water bearing gel forms a good thermal path between the coolant pipes and the beverage pipes, enhancing heat transfer as discussed above.

In it envisaged that carrier means other than a hydrophilic polymer might be used for retaining water between the coolant pipes and the beverage pipes, including as an absorbent fabric or fibrous material such as felt or other similar wicking materials.

In addition to the improved thermal path provided by the thermally conductive media 4 discussed above, the thermal insulation of the python is improved over known pythons by forming the sheath 3 from an improved insulator in the form of a layer 3a of vacuum insulation comprising a porous insulator wrapped in a metallized plastic sheet material to form a sealed envelope which is evacuated to around 10mbar. Such vacuum insulation material has a very low k value and thus increases the insulation of the python without increasing the overall diameter of the python. The vacuum insulation layer 3a is encased in an outer layer 3b of foamed nitrile rubber to protect the vacuum insulation later and to provide additional insulation.

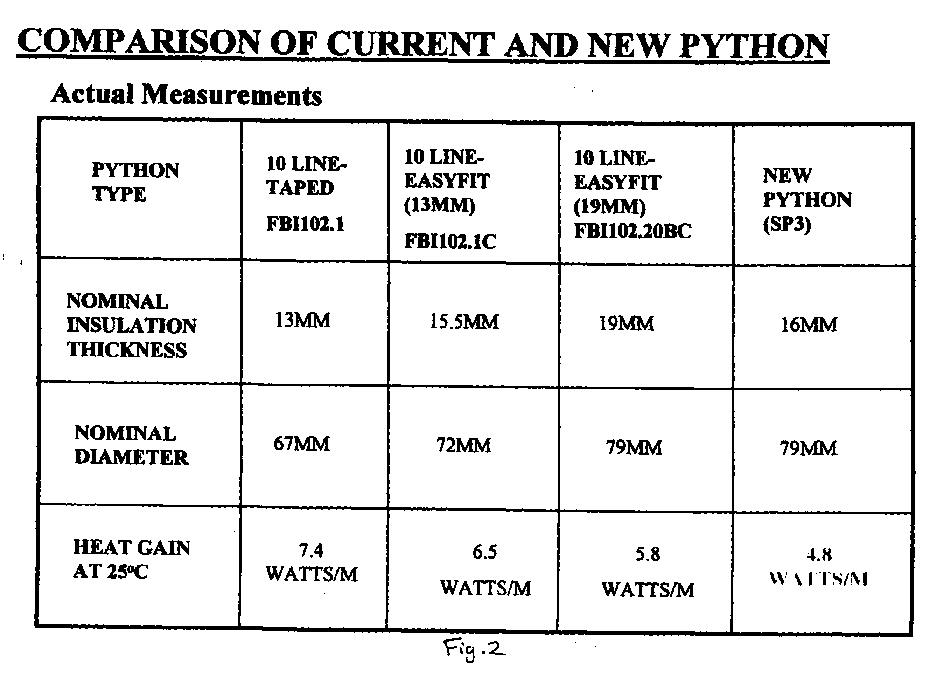

As shown in Fig. 2, even the best current python, having a 19mm thick layer of foamed nitrile rubber insulation, has a heat gain at 25ºC of 5.8W/m. By contrast, the python according to the preferred embodiment of the present invention has a heat gain of only 4.8W/m.

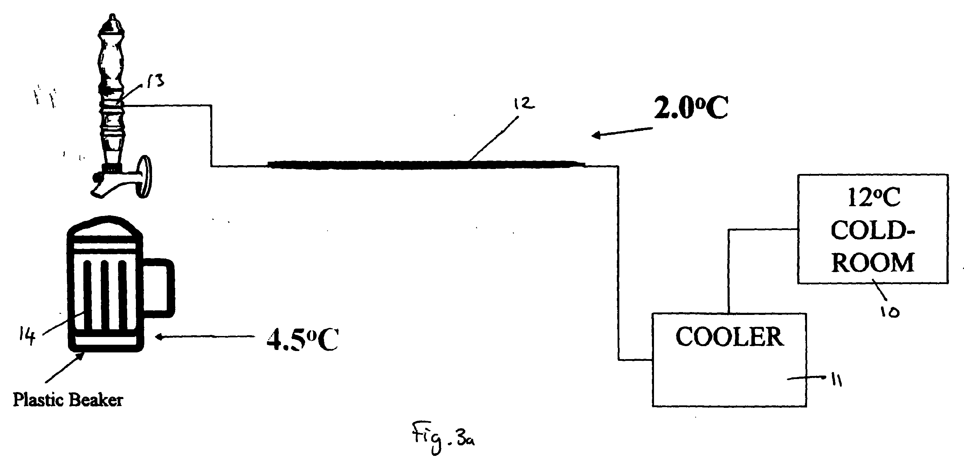

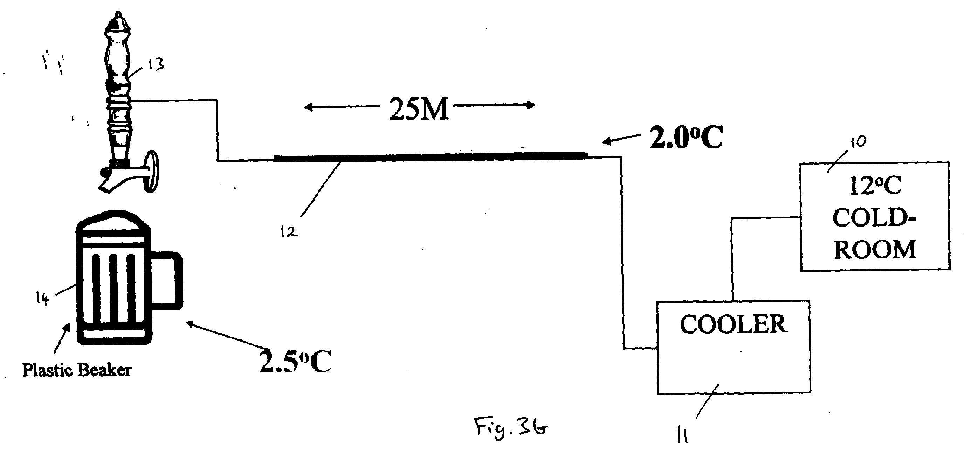

The result of this heat gain in a typical known standard python is shown in Fig. 3a. The beverage dispense system comprises a plurality of beverage storage vessels (usually aluminium kegs) located in a cold room 10, usually in a cellar and typically refrigerated to 12ºC. The beverage, such as beer, lager or cider, first passes into a cooler 11, where it is refrigerated to about 2°C, before passing into a beverage pipe of the python 12. The beverage passes through the python to a dispense tap 13 on a bar, where it can be dispensed into a suitable vessel 14 for serving to a customer. In a typical public house, a python of approximately 25m is required to deliver the beverage from the store to the bar.

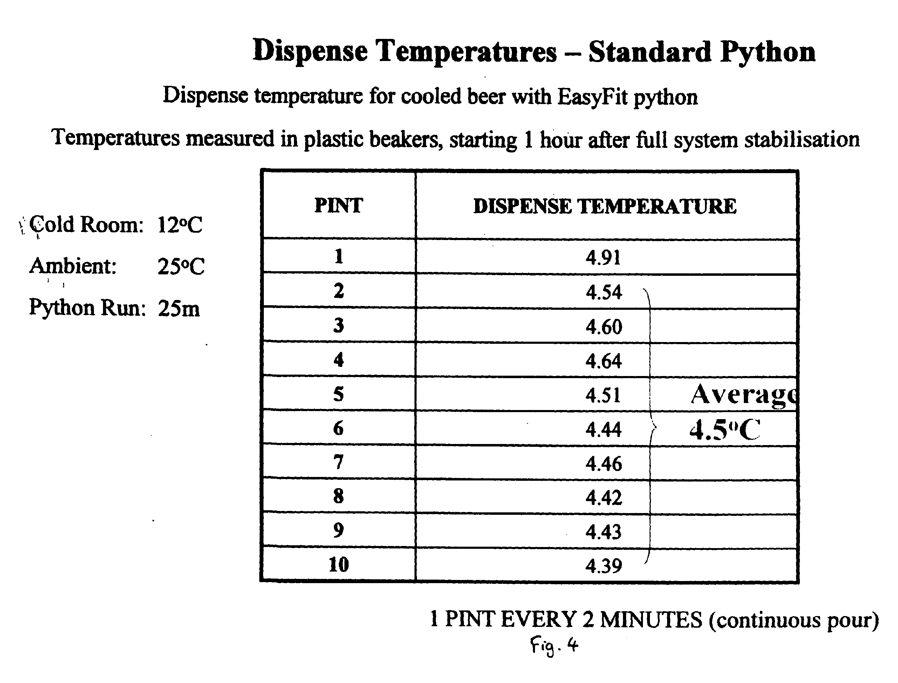

As shown in Fig. 4, due to heat transfer from the ambient air to the beverage in the python, the beverage increases in temperature from 2ºC at the inlet end of the python to 4.5ºC in the vessel into which it is dispensed.

Fig 3b shows a beverage dispense system according to the present invention. The system is identical to the known system of Fig 3a except the known python is replaced with the improved python of Fig. 1.

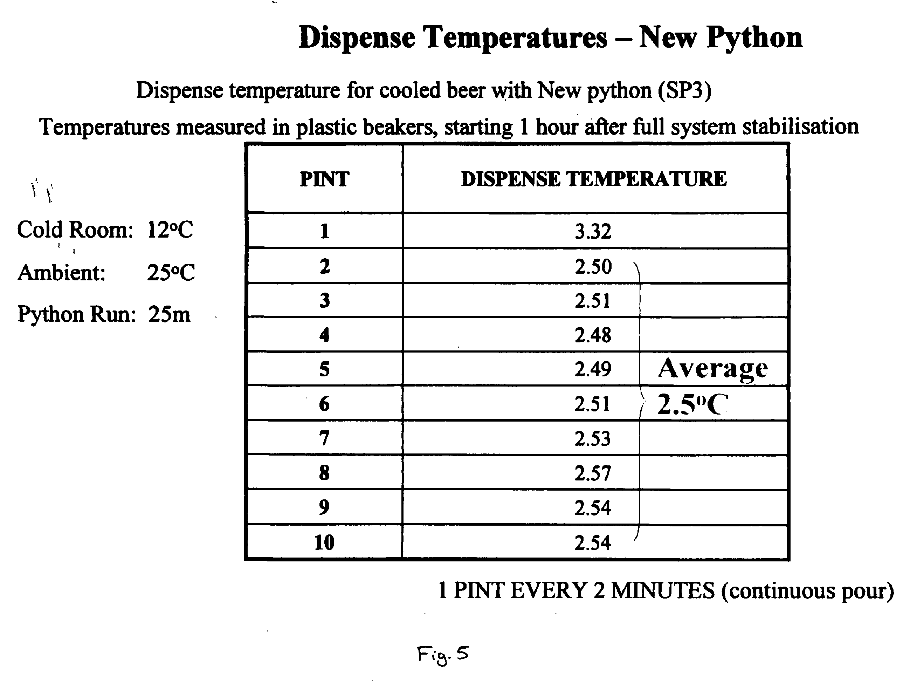

As shown in Fig. 5, with the improved python according to the present invention, the enhanced heat transfer from the beverage to the coolant and the improved insulation of the python reduce the temperature increase of the beverage as it flows through the beverage pipe in the python to only 0.5ºC on average. Thus the present invention provides a 2ºC reduction in the temperature of the beverage in the glass with no increase in cooler load or energy consumption. By contrast, to achieve a similar dispense temperature using a standard prior art python would require additional cooling equipment at the dispense point, with resulting additional cost, energy consumption and reliability problems.

In an alternative embodiment (not shown) the thermally conductive media comprises graphite powder retained in a conformable putty or paste. Such graphite laden putty has a coefficient of thermal conductivity of between 7 and 16 W/mK compared to that of water of 0.5 W/mK and thus provides a more effective thermal path between the beverage pipes and the coolant pipes.

## Claims

1. A beverage python comprising a plurality of beverage pipes for delivering a beverage from a source to a remote dispense point, and at least one coolant pipe for carrying a coolant, the beverage pipes and the at least one coolant pipe being surrounded by a thermally insulating sheath, a thermally conductive medium being provided between the at least one coolant pipe and the plurality of beverage pipes to enhance heat transfer between the at lest one coolant pipe and the plurality of beverage pipes.

2. A beverage python as claimed in claim 1, wherein the thermally conductive media is conformable to at least partially fill the space between the beverage pipes and the at least one coolant pipe.

3. A beverage python as claimed in any preceding claim, wherein the thermally conductive media comprises a liquid.

4. A beverage python as claimed in claim 3, wherein the thermally conductive media comprises water.

5. A beverage python as claimed in any preceding claim, wherein the thermally conductive media is retained in a carrier means to prevent the media from migrating into the region between the plurality of beverage pipes and the surrounding sheath.

6. A beverage python as claimed in claim 5, when dependent upon claim 3 or claim 4, wherein the carrier means comprises an absorbent material.

7. A beverage python as claimed in claim 5, wherein the thermally conductive media comprises water and the carrier means comprises a hydrophilic polymer, such as sodium polyacrylate, which polymer absorbs water to form a gel filling the spaces between the beverage pipes and the at least one coolant pipe.

8. A beverage python as claimed in claim 7, wherein the hydrophilic polymer is carried by a strip of fabric or similar absorbent and flexible material, located between the at least one coolant pipe and the beverage pipe.

9. A beverage python as claimed in any preceding claim, wherein the thermally conductive media comprises a thermally conductive solid material, such as graphite, in granular or powder form, the thermally conductive media preferably being retained in a carrier member in the form of a conformable paste or putty.

10. A beverage python as claimed in any preceding claim, wherein the beverage pipes are formed from a flexible, food grade plastic.

11. A beverage python as claimed in claim 1, wherein the thermally conductive media might comprise a liquid, gas or solid having a coefficient thermal conductivity greater than that of air.

12. A beverage python comprising a plurality of beverage pipes for distributing a beverage from a source to a remote dispense point, and at least one coolant pipe for carrying a coolant, the beverage pipes and the at least one coolant pipe being surrounded by a thermally insulating sheath, the thermally insulating sheath comprises a first layer of thermal insulation comprising a porous thermally insulating material encased in an evacuated enclosure of non-porous sheet material.

13. A beverage python as claimed in claim 12, wherein the non-porous sheet material comprises a metallized plastic sheet material.

14. A beverage python as claimed in claim 12 or 13, wherein the first layer of thermal insulation is surrounded by a second layer of insulation comprising polymeric foam.
